Europäisches Patentamt

**European Patent Office**

Office européen des brevets

(11) Publication number: **0 008 931**
**A1**

## (12) EUROPEAN PATENT APPLICATION

(21) Application number: **79301791.4**

(22) Date of filing: **31.08.79**

(51) Int. Cl.³: **B 62 D 63/06**

(30) Priority: **31.08.78 US 938469**

(43) Date of publication of application:
**19.03.80 Bulletin 80/6**

(84) Designated Contracting States:
**BE CH DE FR GB IT LU NL SE**

(71) Applicant: **Gietman, Jr., Peter J.**
**521 Hartjes Street**
**Combined Locks, Wisconsin, 54113(US)**

(71) Applicant: **Morris, William E.**
**2316 W. Lagoon Court**
**Mequon, Wisconsin 53092(US)**

(72) Inventor: **Gietman, Jr., Peter J.**
**521 Hartjes Street**
**Combined Locks, Wisconsin, 54113(US)**

(72) Inventor: **Morris, William E.**
**2316 W. Lagoon Court**
**Mequon, Wisconsin 53092(US)**

(74) Representative: **George, Roger David et al,**
**Raworth, Moss & Cook 36 Sydenham Road**
**Croydon Surrey CR0 2EF(GB)**

(54) A folding tiltable trailer.

(57) The trailer frame parts (26, 28) are hingedly secured to a main beam (40). Axle (42) and stabilizing bars (44) maintain the structure in the unfolded position. When desired, the unit can be folded by swivelling the axle (42) and frame parts (26, 28), moving the frame parts (24) laterally inwardly towards the main beam (40).

FIG.3

EP 0 008 931 A1

Title:   "A folding tiltable trailer"


This invention relates to a folding tiltable
trailer and more particularly to a trailer which can
be folded into a compacted assembly that occupies a
minimum of space for storage during periods of non-
use and which can be opened into a sturdy trailer
capable of carrying a heavy load during travel over
a road. Such a trailer is adapted to be hitched to
a motor vehicle in the usual manner by a ball and
tongue arrangement.

The trailer is versatile permitting its adaptation to several types of uses. For example, it can
be provided with a tilting bed, a utility box as well
as accessories for carrying bicycles, canoes, boats,
motorcycles, snowmobiles, tents and the like.

United States Patent No. 3,979,133 to Morris
discloses a foldable trailer in which the side
portions of the frame are pivoted upwardly about
the front end thereof to form a compact longitudinal
unit for storage purposes.

According to the present invention there is
provided a folding trailer suitable for towing by a
motor vehicle comprising an elongated frame member
having means for connecting the trailer to the motor
vehicle at one end thereof, a main beam hingedly
secured to said frame member and tiltable relative
to said frame member, a trailer bed, side frames on
either side of said main beam spaced therefrom and
positioned parallel thereto adapted to receive said trailer bed characterised in that there are provided
panel members hingedly attaching said side frames to
said main beam at the forward and rear ends of said
main beam, a pivotable axle is positioned beneath
said main beam and perpendicular thereto extending
to said side frames, said axle being pivotally
secured at one end to one of the side frames and
releasably secured at the other end to the other of
said side frames, said axle being pivotable to a
position where it is parallel to the main beam, and
wheels known per se attached to the ends of said
axle means whereby upon removal of the bed, the axle
means is pivoted to a position parallel to the main
beam and the wheels are drawn inwardly to a position
adjacent said main beam, said panel members swinging
forwardly to permit the side panels to also approach
the main beam thereby forming a compact, elongated
assembly.

An embodiment of the invention will now be
described by way of example only, with reference to
the accompanying drawings, in which:

Figure 1 is a perspective view of a folding
trailer according to a first embodiment of the
invention having a bed and side boards mounted
thereon;

Figure 2 is a perpspective view of a trailer
similar to that of Fig. 1 having a bed mounted thereon and shown in the tilted or tipped position;

Figure 3 is a plan view of the trailer of Fig. 1
without the bed and side boards;

Figure 4 is a right side elevational view of the
trailer of Fig. 1;

Figure 5 is an elevational sectional view through the trailer frame taken on the line 5-5 of Fig. 3;

Figure 6 is a schematic folding diagram illustrating the manner in which the trailer of Fig. 1 is collapsed;

Figure 7 is a plan view illustrating the trailer of Fig. 1 in its collapsed condition;

Figures 8 and 9 are plan and left side views, respectively of the left end of the axle; and,

Figures 10 and 11 are plan and left side views, respectively of the right end of the axle.

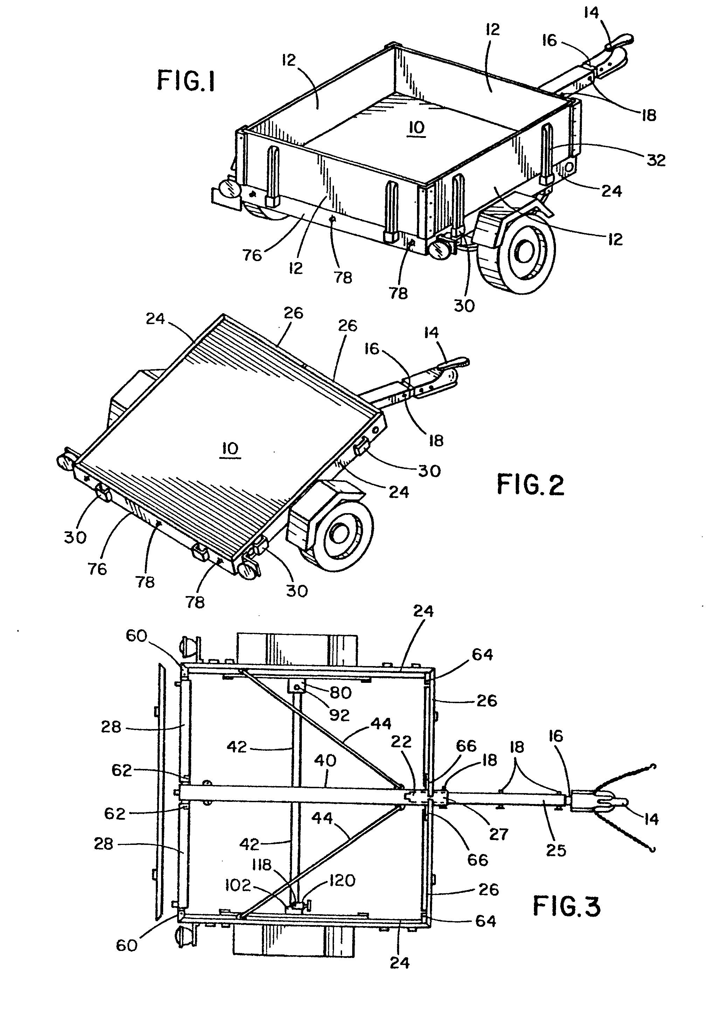

Referring to Figure 1, a collapsible trailer according to an embodiment of the invention is illustrated. The Figure 1 embodiment includes a bed 10 and sideboards 12 secured to the trailer frame. From Figure 2 it will be seen that the trailer is also capable of use without the sideboards 12 so that the bed 10 is easily accessible as, for example, where it is desired to carry motorcycles, bicycles, snowmobiles, etc., which can be secured to the trailer by other means, as for example, brackets or chains. The trailer appears conventional in its assembled position and includes a coupler 14 suitable for attachment to a motor vehicle provided at the end of a tongue 16. The tongue is positioned relative to the arm 25 by means of three pins 18. This permits adjustment of the effective length of the tongue by relocating the tongue 16 to a desired set of holes.

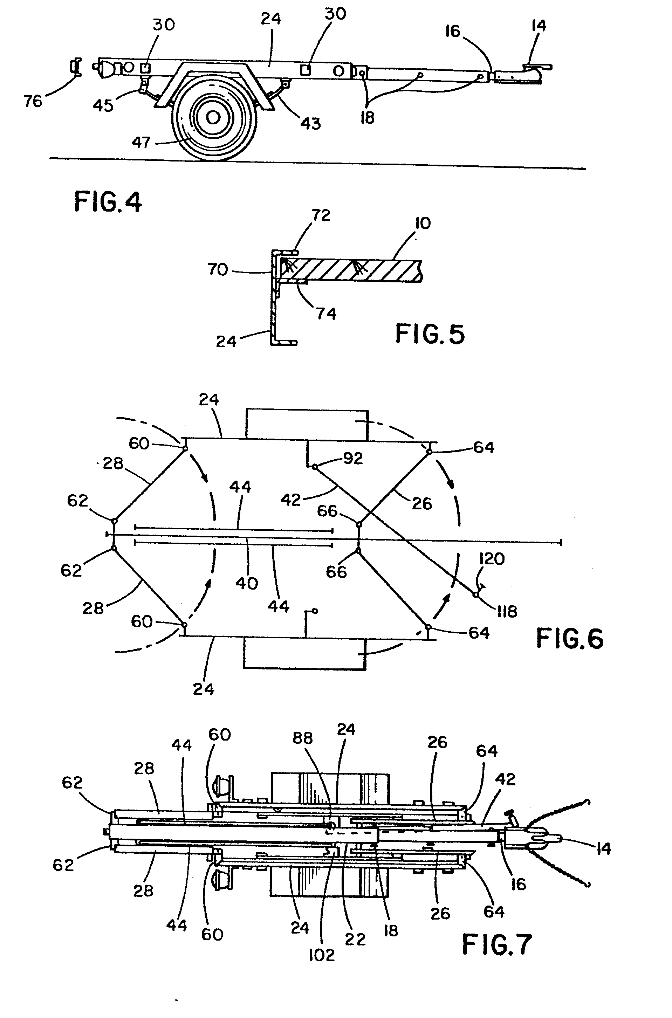

Referring to Figures 3 and 4, the structure of the trailer may be readily observed. The trailer includes a main beam 40, side frame members 24, and swinging panel members 26 and 28 at the front and back of the trailer, respectively. The side frames 24 are provided with brackets or pockets 30 for receiving members 32 attached to the sideboards 12.

The swing panels 26 are provided with similar pockets and thus the sideboards 12 are secured to the trailer frame when desired.

This embodiment is provided with a tilting feature by which the main beam 40 is hingedly secured to the arm 25 at point 27 so that it may be tilted relative to the arm merely by removing the rearmost hinge pin 18. When the pin is removed, the main beam 40 tilts to the position indicated in Figure 2. The side frames 24 and panel members 26 and 28 are secured to the main beam 40 and thus tilt with the latter element. This permits easy access to the trailer bed for loading and unloading.

In the assembled condition the trailer is secured in a rectangular configuration shown in Figures 3 and 4. Axle 41 is connected by springs 43 and shackles 45 to the side panels 24 and wheels 47 are provided in the conventional manner. Similarly in order to assure structural rigidity, stabilizing bars 44 are provided between the main beam 40 and the side panels 24. The axle 42 is removably connected to the side panels to permit the axle to be swung into a stored position during folding of the trailer. In the case of the stabilizing bars 44 the connections are by means of eye and hook or similar arrangement whereby during collapsing of the trailer the stabilizing bars pivot to a position substantially parallel to the main beam 40 as illustrated in Figure 7.

The forward and rear swing panels 26 and 28 are hinged between the main beam 40 and the side panels 24 as by hinges 60 and 62 for the rear swing panel and hinges 64 and 66 for the front swing panels.

Figure 5 illustrates the manner in which the
bed 10 is received and supported in the frame 24.
A channel 70 defined by projections 72 and 74 is
dimensioned to receive the bed and support it thereon in the channel 70. A back panel member 76 (Figure
4) is secured in position over the swing panels 28
and main beam 40 and includes a portion which restrains the bed from rearward movement once in
position on the trailer frame. The back panel 76 is
secured to the swing members 28 and main beam 40 by
three pins 78 (Figure 2). Desirably, the back panel
also carries pockets 30 for securing the rear sideboards 12.

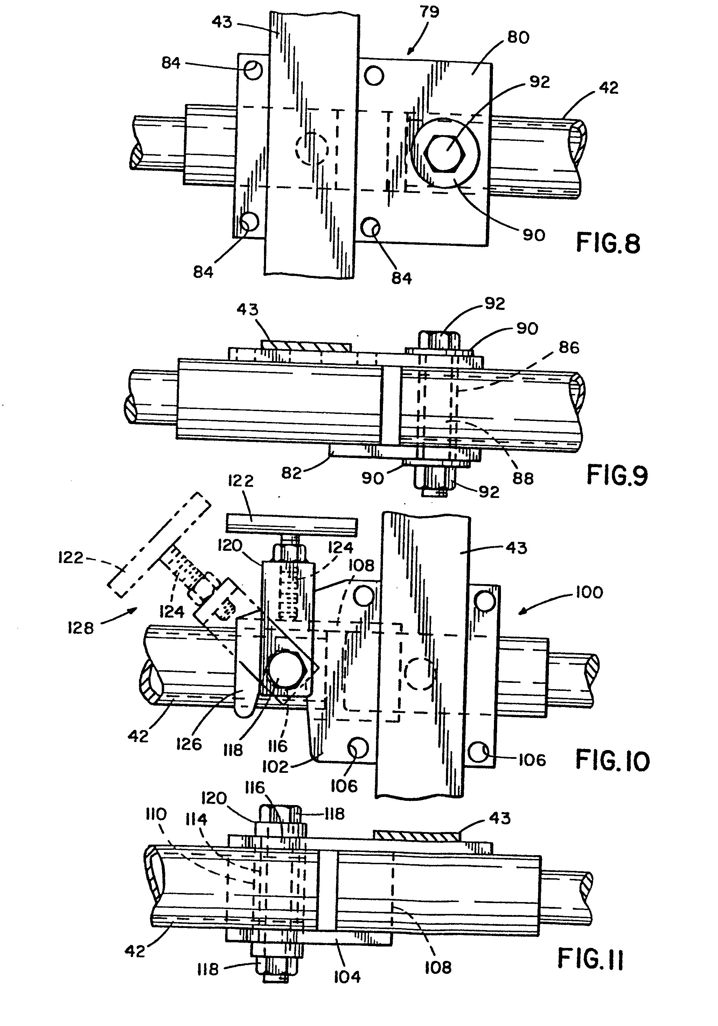

Referring now to Figures 8 through 11, the
manner in which the axle is pivotally secured to the
side frames and wheels will be described. Referring
first to Figures 8 and 9, the left side (or top side
as viewed in Figure 3) of the trailer pivotally
secures the axle 42 to the wheel assembly by means of
a bracket 79. The bracket includes a top plate 80 and
a bottom plate 82. The plates are bolted to the wheel
spring assembly by means of conventional U bolts
secured by nuts passing through the openings 84. The
left side of axle 42 has a vertically aligned opening
86 therethrough as do the top and bottom plates. The
axle is thus secured to the bracket assembly 79 by
means of a pivot pin 88 passing through the openings
in the plates and axle. Washers 90 and nuts 92
rotatably secure the pin in place permitting the axle
to rotate relative to the bracket as will be described.

Figures 10 and 11 illustrate the means for
releasably securing the right end of the axle (bottom
end as viewed in Figure 3) to the sideboards 24. As
with the left side, the axle 42 is secured to a bracket 100 which includes a top plate 102 and a bottom plate 104. The bracket is, in turn, secured to the wheel's spring assembly by U bolts secured by nuts through apertures 106. The bottom plate 104 is L-shaped and includes a side wall 108 which serves as a bearing surface for the locking mechanism now to be described. The axle is provided with a vertically disposed aperture 110 in which a sleeve 114 is provided. A pivot pin 116 is rotatably secured by bolts 118. Secured to the pin 116 is a locking yoke 120 which includes a handle 122 connected to a threaded shaft 124 which is threadably positionable through an aperture in the rear portion of the yoke thereby to engage and disengage the side wall 108.

The top plate 102 is provided with a flange portion 126 which opens rearwardly of the trailer to receive the locking yoke and pivot pin assembly. When the assembly is positioned as shown in Figure 10 the locking yoke can be moved from the phantom position illustrated at 128 to the locked position illustrated in solid lines. When in the locked position the handle 122 is rotated to cause the shaft 124 to bear against the side wall 108 thereby to secure the axle to the bracket. To release the axle from the bracket the operation is reversed and the yoke rotated to the unlocked position shown at 128.

Referring now to Figures 1, 6 and 7, the manner of folding the trailer will be described. The sideboards 12 are first removed permitting access to the bed 10 and the back panel 76. The back panel 76 is dropped by removing pins 78. The bed 10 may then be removed from the channel 70 providing access to the axle which supports the trailer structure in the assembled position.

In order to initiate folding of the structure, the locking yoke 120 associated with the right end of the axle is unlocked and freed from the confines of the bracket 100. This permits the axle to swing forwardly about the left end pivot pin in the manner indicated in Figure 6. The frame sides 24 are then pulled inwardly forcing the swing panels 26 and 28 to rotate in the manner indicated. That is, the front and rear swing panels move forwardly on their hinges and become positioned parallel to the main beam 40 as the side frames 24 move inward. As the side frames move inward the stabilizer bars 44 move from the bracing position shown in Figure 3 to a position parallel to the main beam illustrated in Figure 6.

Once in the collapsed position the trailer will be secured by a simple latching mechanism. In order to reassemble the unit the steps described herein need only be reversed. Briefly, the frame sides 24 are pulled outwardly moving the swing panels back into position, the right end of the axle is secured to the bracket and the bed is replaced in the frame channel.

The embodiments of this invention to produce a folding trailer of the type described which can be constructed at low cost and of readily available materials. This trailer can be folded and unfolded in a simple and efficient manner without the need for special tools or skilled labour and, when in the folded position, occupies a minimum of space for storage and the like. This trailer, when in the unfolded position, represents a sturdy trailer capable

- 8 -

of carrying relatively heavy loads and embodies
means for retaining the trailer in the unfolded
position for safe and secure operation of the
trailer over roads while being towed by a motor
vehicle.

While we have shown and described embodiments
of this invention in some detail, it will be understood that this description and illustrations are
offered merely by way of example, and that the
invention is to be limited in scope only by the
appended claims.

Claims:

1.      A folding tiltable trailer suitable for towing by a motor vehicle comprising:
an elongated frame member (25) having means (14) for connecting the trailer to the motor vehicle at one end thereof;
a main beam (40) hingedly secured to said frame member (25) and tiltable relative to said frame member (25);
a trailer bed (10)
side frames (24) on either side of said main beam (40) spaced therefrom and positioned parallel thereto adapted to receive said trailer bed (10), characterised in that there are provided
panel members (26,28) hingedly attaching said side frames (24) to said main beam (40) at the forward and rear ends of said main beam;
a pivotable axle (42) is positioned beneath said main beam (40) and perpendicular thereto extending to said side frames (24), said axle (42) being pivotally secured (92) at one end (80) to one of the side frames (24) and releasably secured (118,120) at the other end (102) to the other of said side frames (24), said axle (42) being pivotable to a position where it is parallel to the main beam (40); and
wheels (47) known per se attached to the ends of said axle means (42), whereby upon removal of the bed (10), the axle means (40) is pivoted to a position parallel to the main beam (40) and the wheels (47) are drawn inwardly to a position adjacent said main beam (40), said panel members (26,28) swinging forwardly to permit the side panels (24) to also approach the main beam (40) thereby forming a compact, elongated assembly.

2.      A trailer as claimed in Claim 1, wherein
said other end (102) of said axle (42) is provided
with a locking yoke (118,120) and said other end of
said side frames (24) includes a bracket (79)
having a flanged portion for receiving said yoke (120)
therein, said yoke (120) including means (118) for
releasably  securing said yoke (120) to said bracket(79).

3.      A trailer as claimed in Claim 1 or Claim 2,
further including stabilizer bars (44) connecting
said side panels (24) to said main beam (40) to add
rigidity to said trailer, each of said bars (44)
being pivotally connected (66,64) to said main beam
(40) and one of said side panels (24) at an acute
angle relative to said main beam (40) whereby during
collapsing of said trailer said bars (44) pivot to
positions parallel to said main beam (40).

4.      A trailer as claimed in any one of Claims 1
to 3, wherein said side panels (24) and said panel
members (26,28) include a channel (70,72,74) adapted
to support said bed (10) therein.

5.      A trailer as claimed in any one of Claims 1
to 4, further including removable sideboards (12)
and wherein said side panels (24) and panel members
(26,28) include means (30) for securing said side-
boards (12) thereto.

FIG.1

FIG.2

FIG.3

**FIG.4**

**FIG.5**

**FIG.6**

**FIG.7**

FIG.8

FIG.9

FIG.10

FIG.11

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | | Relevant to claim | |
| D | US - A - 3 979 133 (MORRIS) <br> * column 2, lines 17 to 29; column 5, line 43 to column 6, line 40; fig. * <br> -- | | 1,2,4 | B 62 D 63/06 |
| | US - A - 3 623 744 (BERTNESS et al.) <br> * fig. 3, 4, 5, 9 * <br> -- | | 1,5 | |
| | FR - A - 2 050 658 (HIDAWAY TRAILER & CAMPING CO. LTD.) <br> * page 2, lines 2 to 28; fig. 1, 2 * <br> -- | | 1,3 | |
| | | | | **TECHNICAL FIELDS SEARCHED (Int.Cl.³)** |
| | DE - U - 6 929 231 (REMPP) <br> * claim 1; fig. 1 * <br> -- | | 1,3 | |
| A | US - A - 3 612 600 (SALICHS) <br> * fig. 3, 4 * <br> ---- | | | B 60 P 3/00 <br> B 62 D 21/00 <br> B 62 D 63/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 07-11-1979 | LEITZ |

EPO Form 1503.1 06.78